# EUROPEAN PATENT APPLICATION

(11) **EP 4 447 610 A1**
(43) Date of publication of application: **16.10.2024**
(21) Application number: 22904665.1
(22) Date of filing: 07.12.2022
(51) Int. Cl.: H04W 88/06, H04W 88/04, H04W 4/46, H04W 24/02

(54) **COMMUNICATION DEVICE AND METHOD FOR VEHICLE TO VEHICLE COMMUNICATION USING SAME**

(30) Priority: 08.12.2021 KR 20210174560
(71) Applicant: LG INNOTEK CO., LTD., Seoul 07796 (KR)
(72) Inventor: LEE, Jung Yub, Seoul 07796 (KR)
(74) Representative: Plasseraud IP
(86) International application number: PCT/KR2022/019824
(87) International publication number: WO 2023/106836

(57) **Abstract**

A communication device, according to one embodiment of the present invention, comprises: a coverage management unit for periodically updating coverage information including an in-coverage terminal list and information on communication methods supported by each terminal in the terminal list; a reception unit for receiving a first data packet supporting a first communication method; a control unit which, if there is a terminal in the terminal list which cannot support the first communication method and can support a second communication method that is different from the first communication method, switches the first data packet to a second data packet supporting the second communication method; and a transmission unit for transmitting the second data packet.

## Description

### [Technical Field]

The present invention relates to a communication device and a method for vehicle-to-vehicle communication using the same, and more specifically, to a method for vehicle-to-vehicle communication in an environment in which communication devices supporting different types of vehicle-to-everything (V2X) communication methods are mixed.

### [Background Art]

As information and communication technology and automobile technology develop, interest in autonomous vehicles is increasing. Generally, an autonomous vehicle is a car that is equipped with advanced driver-assistance system (ADAS) technology, route navigation technology, vehicle-to-everything (V2X) communication technology, etc., using sensors such as cameras, radar, lidar, and the like to acquire and recognize information on the surrounding environment, and drives itself to its destinations.

Generally, V2X communication technology is a technology in which a vehicle exchanges information with objects such as other vehicles, mobile devices, roads, etc., through a wired or wireless network in order to share safety information and driving information between vehicles.

V2X communication technology may be largely divided into two communication methods of a dedicated short-range communications (DSRC) method and a cellular V2X (C-V2X) method. The DSRC method and the C-V2X method are the same in that they use the 5.9 GHz frequency band, but differ in that the DSRC method is a technology based on the Institute of Electrical and Electronics Engineers (IEEE) 802.11 standard and the C-V2X method is a technology based on the cellular communication standard.

Interest in hybrid communication devices supporting both DSRC and C-V2X methods is increasing, but currently, on the road, communication devices supporting only the DSRC method, communication devices supporting only the C-V2X method, and hybrid communication devices supporting both the DSRC method and the C-V2X method are mixed.

In such an environment, a communication method between communication devices supporting different types of methods is required.

### [Disclosure]

### [Technical Problem]

The technical problem to be achieved by the present invention is to provide a communication method between communication devices in an environment in which communication devices supporting different types of vehicle-to-everything (V2X) communication methods are mixed.

### [Technical Solution]

A communication device according to an embodiment of the present invention includes a coverage management unit configured to periodically update coverage information including an in-coverage terminal list and information on communication methods supported by each terminal in the terminal list; a reception unit configured to receive a first data packet supporting a first communication method; a control unit configured to, when a terminal that cannot support the first communication method and can support a second communication method that is different from the first communication method is present in the terminal list, switch the first data packet to a second data packet supporting the second communication method; and a transmission unit configured to transmit the second data packet.

A period for updating the coverage information may be preset or may vary dynamically.

The period for updating the coverage information may vary dynamically according to at least one of the speed of a vehicle equipped with the communication device, the speed of surrounding vehicles, the traffic volume surrounding the vehicle equipped with the communication device, and the surrounding network environment of the vehicle equipped with the communication device.

The reception unit may receive a message containing information for updating the coverage information periodically broadcasted by other terminals within coverage.

The transmission unit may periodically broadcast a message containing information for updating the coverage information to other terminals within the coverage.

The first communication method may be one of a dedicated short-range communications (DSRC) method and a cellular vehicle-to-everything (C-V2X) method, and the second communication method may be the other of the DSRC method and the C-V2X method.

The control unit may support both the first communication method and the second communication method.

When a roadside unit is present in the terminal list, the control unit may stop switching from the first data packet to the second data packet.

The coverage information may further include at least one of received signal strength indicator information, load information, and power information for each terminal.

The load information may be load information on a central processing unit (CPU) for each terminal, and the power information may be maximum power information for each terminal.

The control unit may select an anchor terminal in the terminal list using at least one of the received signal strength indicator information, the load information, and the power information for each terminal.

The anchor terminal may be a terminal supporting both the first communication method and the second communication method.

When a roadside unit is present in the terminal list, the roadside unit may be selected as an anchor terminal.

When the anchor terminal is another communication device, the control unit may stop switching from the first data packet to the second data packet.

The first communication method and the second communication method may use the same frequency band.

A communication method according to another embodiment of the present invention includes periodically updating coverage information including an in-coverage terminal list and information on communication methods supported by each terminal in the terminal list; receiving a first data packet supporting a first communication method; when a terminal that is not allowed to support the first communication method and is allowed to support a second communication method that is different from the first communication method is present in the terminal list, switching the first data packet to a second data packet supporting the second communication method; and transmitting the second data packet.

The communication method may further include selecting an anchor terminal in the terminal list using the coverage information, wherein the coverage information may further include at least one of received signal strength indicator information, load information, and power information for each terminal.

When the anchor terminal is a roadside unit or another communication device, switching from the first data packet to the second data packet may stop.

### [Advantageous Effects]

According to embodiments of the present invention, a hybrid terminal supporting both a first communication method and a second communication method can relay communication between a terminal supporting only the first communication method and a terminal supporting only the second communication method, and thus road conditions can be shared in real time between vehicles on the road. Further, the hybrid terminal supporting both the first communication method and the second communication method can serve as an anchor even in an environment without a roadside unit (RSU) due to a lack of infrastructure.

### [Description of Drawings]

FIGS. 1 and 2 are conceptual diagrams of a vehicle-to-vehicle communication system according to an embodiment of the present invention.
FIG. 3 is a block diagram of a communication device in a vehicle-to-vehicle communication system according to an embodiment of the present invention.
FIG. 4 is a flowchart of a communication method in a communication device according to an embodiment of the present invention.
FIGS. 5 and 6 show examples of coverage information according to an embodiment of the present invention.
FIG. 7 shows an example of pseudocode for updating coverage information.
FIG. 8 shows an example of pseudocode for selecting an anchor terminal.
FIG. 9 shows an example of pseudocode for performing a communication method in a communication device according to an embodiment of the present invention.

### [Modes of the Invention]

Hereinafter, exemplary embodiments of the present invention will be described in detail with reference to the accompanying drawings.

However, it should be understood that the technical spirit of the present invention is not limited to embodiments to be disclosed below but may be implemented in many different forms. It should be understood that within the scope of the present invention, one or more elements of each of the embodiments may be selectively combined and substituted.

In addition, terms (including technical and scientific terms) used in the embodiments of the present invention have the same meaning as commonly understood by one of ordinary skill in the art to which the present invention belongs. It should be further understood that terms, such as those defined in commonly used dictionaries, should be interpreted as having a meaning that is consistent with their meaning in the context of the related art.

Further, the terms used in the embodiments of the present invention are provided only to describe embodiments of the present invention and not for purposes of limitation.

In this specification, the singular forms include the plural forms unless the context clearly indicates otherwise, and the phrase "at least one element (or one or more elements) of an element A, an element B, and an element C," should be understood as including the meaning of at least one of all combinations being obtained by combining the element A, the element B, and the element C.

Further, in describing elements of the present invention, terminologies such as "first," "second," "A," "B," "(a)," and "(b)" may be used.

The terms are used to distinguish an element from another element but a nature, an order, or a sequence of the elements is not limited by the terminology.

It will be understood that when an element is referred to as being "connected" or "coupled" to another element, it can be directly connected or coupled to another element, intervening elements may be present, or it can be connected or coupled to another element through still another element.

Further, when an element is described as being formed "on (above)" or "under (below)" another element, the term "on (above)" or "under (below)" includes both of a case in which the two elements are in direct contact with each other or a case in which one or more elements are (indirectly) disposed between the two elements. In addition, the term "on (above)" or "under (below)" includes a case in which another element is disposed in an upward direction or a downward direction with respect to one of the elements.

Hereinafter, embodiments will be described in detail with reference to the accompanying drawings, the same or corresponding components will be denoted by the same reference numerals regardless of reference numbers, and thus the description thereof will not be repeated.

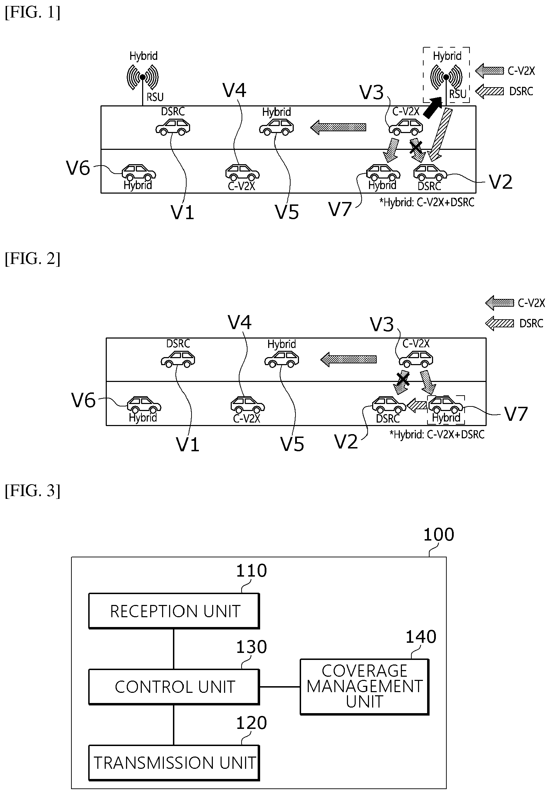

FIGS. 1 and 2 are conceptual diagrams of a vehicle-to-vehicle communication system according to an embodiment of the present invention.

Referring to FIGS. 1 and 2, on the road, vehicles V1 and V2 equipped with a first communication device supporting a first communication method, vehicles V3 and V4 equipped with a second communication device supporting a second communication method, and vehicles V5, V6, and V7 equipped with a third communication device supporting both the first communication method and the second communication method are mixed and driving together. Referring to FIG. 1, a roadside unit (RSU) may also be equipped with the third communication device supporting both the first communication method and the second communication method. The first communication device, the second communication device, and the third communication device are vehicle-to-everything (V2X) communication devices for communication between vehicles. V2X means that vehicles exchange information with objects, and may include wireless communication between vehicles and networks (vehicle-to-network (V2N)), wireless communication between vehicles and infrastructure (vehicle-to-infrastructure (V2I)), wireless communication between vehicles (vehicle-to-vehicle (V2V)), wireless communication between vehicles and pedestrians (vehicle-to-pedestrian (V2P)), etc.

Here, the first communication method may be a dedicated short-range communications (DSRC) method, and the second communication method may be a cellular V2X (C-V2X) method. The DSRC method and the C-V2X method use the same frequency band, 5.9 GHz, but physical interfaces thereof are different. Accordingly, communication between a communication device supporting the DSRC and a communication device supporting the C-V2X is impossible.

That is, communication between the vehicles V1 and V2 equipped with the first communication device supporting the first communication method, communication between the vehicles V3 and V4 equipped with the second communication device supporting the second communication method, and communication between the vehicles V5, V6, and V7 equipped with the third communication device supporting both the first communication method and the second communication method are possible, communication between the vehicles V1 and V2 equipped with the first communication device supporting the first communication method and the vehicles V5, V6, and V7 equipped with the third communication device supporting both the first communication method and the second communication method is possible, and communication between the vehicles V3 and V4 equipped with the second communication device supporting the second communication method and the vehicles V5, V6, and V7 equipped with the third communication device supporting both the first communication method and the second communication method is possible. However, communication between the vehicles V1 and V2 equipped with the first communication device supporting the first communication method and the vehicles V3 and V4 equipped with the second communication device supporting the second communication method is impossible.

Accordingly, there is a problem in that it is difficult to smoothly share safety information and driving information between vehicles in a system in which communication devices supporting different communication methods are mixed.

In the embodiment of the present invention, in order to solve the above problem, a third communication device supporting both the first communication method and the second communication method is provided to relay communication between the first communication device supporting the first communication method and the second communication device supporting the second communication method.

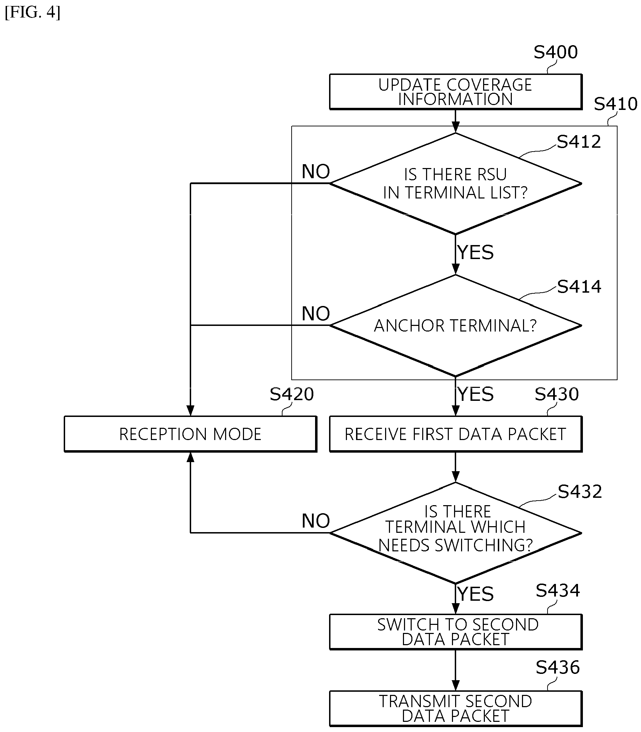

FIG. 3 is a block diagram of a communication device in a vehicle-to-vehicle communication system according to an embodiment of the present invention, and FIG. 4 is a flowchart of a communication method in the communication device according to the embodiment of the present invention.

Referring to FIG. 3, a communication device 100 according to the embodiment of the present invention includes a reception unit 110, a transmission unit 120, and a control unit 130. The communication device 100 according to the embodiment of the present invention may be a communication device mounted in a vehicle.

The reception unit 110 receives data packets from an external terminal, and the transmission unit 120 transmits the data packets to the external terminal. The reception unit 110 and the transmission unit 120 may be referred to as radio frequency (RF) modules.

The control unit 140 controls the communication device 110 by and large. The control unit 140 supports both a first communication method and a second communication method. Accordingly, the communication device 100 may be referred to as a hybrid communication device. Hereinafter, an example in which the first communication method is a DSRC method and the second communication method is a C-V2X method will be described, but the present invention is not limited thereto, and the first communication method may be a first radio access technology (RAT), and the second communication method may be a second RAT that is different from the first RAT.

According to the embodiment of the present invention, the communication device 100 further includes a coverage management unit 140. The coverage management unit 140 periodically updates coverage information of the communication device 100. Here, the coverage is an area in which communication of the communication device 100 is possible, and the coverage information includes an in-coverage terminal list and information on communication methods supported by each terminal in the terminal list.

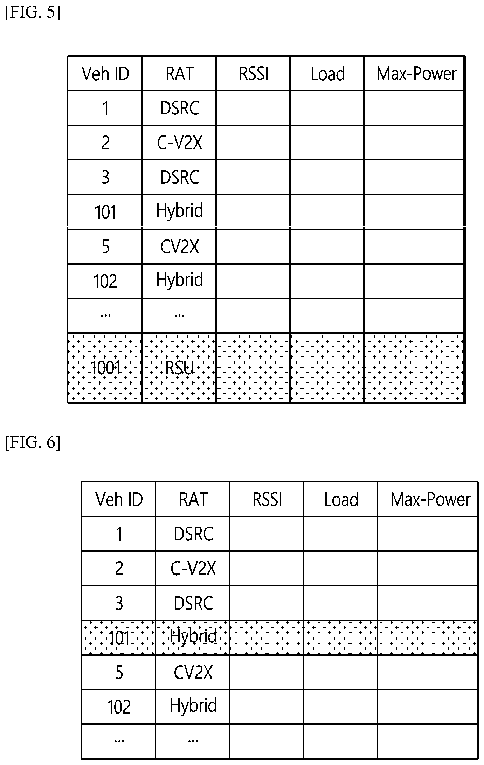

FIGS. 5 and 6 show examples of coverage information according to an embodiment of the present invention. Referring to FIGS. 5 and 6, the coverage information may be managed in the form of a table and includes a terminal list and information on RATs, which are communication methods supported by each terminal in the terminal list. Here, the terminals may be the first communication device, the second communication device, and the third communication device of FIGS. 1 and 2. The terminal list may include identifications (IDs) of the terminals or IDs of vehicles or RSUs equipped with the terminals. When an RSU is present within the coverage, the coverage information may include RSU information, as shown in FIG. 5. When no RSU is present within the coverage, the coverage information may not include RSU information, as shown in FIG. 6.

According to the embodiment of the present invention, the coverage information may further include parameter information for each terminal in the terminal list. The parameter information for each terminal may include at least one of received signal strength indicator (RSSI) information for each terminal, load information for each terminal, and power information for each terminal. Here, the load information for each terminal may be load information on a central processing unit (CPU) for each terminal, and the power information for each terminal may be maximum power (max_Power) information for each terminal.

Referring to FIG. 3 again, according to the embodiment of the present invention, the control unit 130 uses a result obtained by the coverage management unit 140 updating the coverage information to relay communication between the terminals within the coverage.

That is, when a terminal which cannot support the first communication method and can support the second communication method is present in the terminal list, the control unit 130 switches a first data packet supporting the first communication method to a second data packet supporting the second communication method. For example, when a terminal which cannot support a DSRC method and can only support a C-V2X method is present in the terminal list, the control unit 130 may switch a data packet supporting the DSRC method to a data packet supporting the C-V2X method. Conversely, when a terminal which cannot support the C-V2X method and can only support the DSRC method is present in the terminal list, the control unit 130 may switch a data packet supporting the C-V2X method to a data packet supporting the DSRC method.

Accordingly, the communication device 100 according to the embodiment of the present invention, which is a hybrid communication device supporting both the first communication method and the second communication method, may relay communication between a communication device supporting only the first communication method and a communication device supporting only the second communication method. Accordingly, in an environment in which a communication device supporting only the first communication method, a communication device supporting only the second communication method, and a communication device supporting both the first communication method and the second communication method are mixed, rapid and smooth communication therebetween is possible.

Hereinafter, the communication method of the communication device according to the embodiment of the present invention will be described in more detail.

Referring to FIG. 4, the communication device 100 periodically updates coverage information (S400). As shown in FIGS. 5 and 6, the coverage information may be managed in the form of a table, may include a terminal list and information on RATs, which are communication methods supported by each terminal in the terminal list, and further include parameter information for each terminal in the terminal list. With regard to the coverage information, description of content that is the same as that described with reference to FIGS. 5 and 6 will not be repeated.

A period at which the communication device 100 updates the coverage information may be a preset period. Alternatively, the period at which the communication device 100 updates the coverage information may vary dynamically. For example, the period at which the communication device 100 updates the coverage information may vary dynamically according to the speed of a vehicle equipped with the communication device 100, the speed of surrounding vehicles, the traffic volume around the vehicle equipped with the communication device 100, the surrounding network environment of the vehicle equipped with the communication device 100, etc.

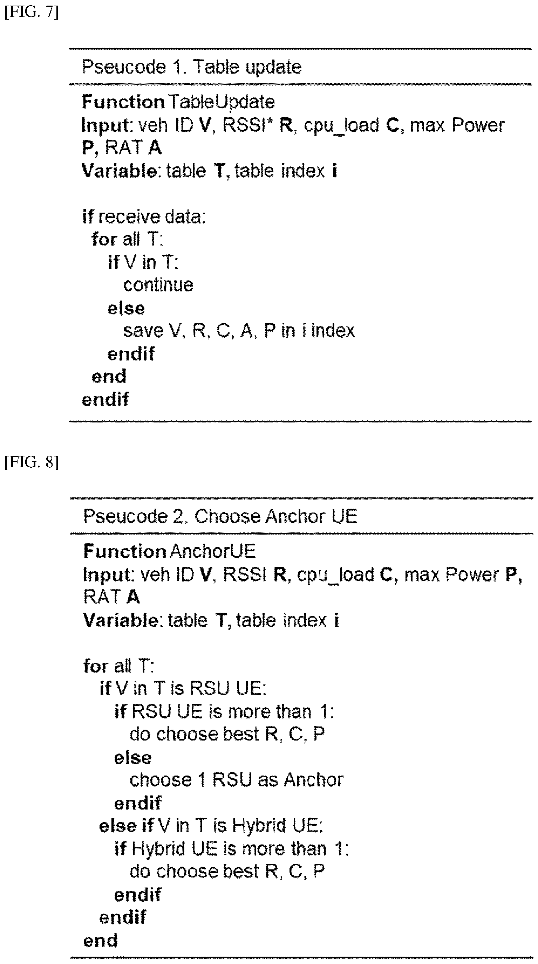

The update of the coverage information may be performed through communication with terminals within coverage. For example, terminals within the coverage may transmit IDs of the terminals or IDs of vehicles or RSUs equipped with the terminals, and information on supported communication methods. The terminals within the coverage may further transmit parameter information, for example, at least one of received signal strength information, load information, and power information. When the terminals within the coverage periodically broadcast messages containing information for updating the coverage information, the communication device 100 may collect the information for updating the coverage information. For example, among the terminals within the coverage, a C-V2X terminal may periodically transmit "SPS folw," and a DSRC terminal may periodically transmit "timing advertisement." The communication device 100 may update the coverage information using the "SPS folw" or the "timing advertisement." FIG. 7 shows an example of pseudocode for updating coverage information. Referring to FIG. 7, the communication device 100 may collect an ID V, RSSI information R, load information C, and power information P for each terminal within coverage, and when a new ID V is present, the communication device 100 may store RSSI information R, load information C, and power information P for the corresponding ID V.

Next, the communication device 100 selects an anchor terminal in the terminal list using the coverage information updated in operation S400 (S410). In this specification, the anchor terminal is a terminal that relays communication between different communication devices supporting different types of communication methods.

To this end, the communication device 100 first looks up whether an RSU is present in the terminal list (S412). When an RSU is present in the terminal list, the RSU may become an anchor terminal so that the communication device 100 may be switched to a reception mode (S420). When the communication device 100 has served as an anchor terminal before updating the coverage information, the communication device 100 may stop serving as the anchor terminal because an RSU, which is a new anchor terminal, is present within the coverage. Although not illustrated, before the communication device 100 is switched to the reception mode, the communication device 100 may transmit a message indicating that it is an anchor terminal, to the RSU, which is an anchor terminal.

When no RSU is present in the terminal list, the communication device 100 determines whether the communication device 100 itself is an anchor terminal (S414). The anchor terminal may be selected using at least one of the RSSI information, the load information, and the power information for each terminal in the terminal list. FIG. 8 shows an example of pseudocode for selecting an anchor terminal. Referring to FIG. 8, when there are one or more RSUs in the terminal list, the communication device 100 selects an optimal anchor terminal in consideration of the RSSI information R, the load information C, and the power information P, and when there is one RSU in the terminal list, the communication device 100 selects the RSU as the anchor terminal.

When there is no RSU in the terminal list, the communication device 100 retrieves a hybrid terminal in the terminal list, and when there are one or more hybrid terminals, the communication device 100 selects an optimal anchor terminal in consideration of the RSSI information R, the load information C, and the power information P. For example, the communication device 100 may select a terminal with the strongest RSSI, the lowest CPU load, or the highest maximum power as the anchor terminal. Alternatively, the communication device 100 may consider all of the RSSI information R, the load information C, and the power information P in order to select the anchor terminal, and different weights may be set for each of the RSSI information R, the load information C, and the power information P.

Here, the hybrid terminal is a terminal supporting both the first communication method and the second communication method, and is a terminal mounted in a vehicle, not a terminal mounted on an RSU.

As a result of the determination in operation S414, when it is determined that the communication device 100 itself is not an optimal anchor terminal in the terminal list, the communication device 100 may be switched to the reception mode (S420). When the communication device 100 has served as the anchor terminal before updating the coverage information, but a new anchor terminal is retrieved, the communication device 100 may stop serving as the anchor terminal. Although not illustrated, before the communication device 100 is switched to the reception mode, the communication device 100 may transmit a message indicating that it is an anchor terminal, to the anchor terminal.

Meanwhile, when the communication device 100 is an anchor terminal, the communication device 100 may serve as the anchor terminal.

That is, when the communication device 100 receives a first data packet supporting a first communication method (S430), the communication device 100 looks up whether a terminal that cannot support the first communication method and can support a second communication method that is different from the first communication method is present in the terminal list (S432). For example, when the communication device 100 receives a first data packet supported by a DSRC method, the communication device 100 looks up whether a terminal that cannot support the DSRC method and can only support a C-V2X method is present in the terminal list. When all the terminals in the terminal list can support the first communication method, the communication device 100 is switched to the reception mode (S420), but when a terminal that can only support the second communication method, which is different from the first communication method, is present in the terminal list, the communication device 100 switches the first data packet to a second data packet supporting the second communication method (S434), and transmits the second data packet (S436).

For example, when the communication device 100 receives the first data packet, the communication device 100 determines whether the first data packet is a data packet supported by the first communication method or a data packet supported by the second communication method. This may be confirmed using a header of the data packet. When the communication device 100 is desired to switch the first data packet to the second data packet, the communication device 100 may extract a payload of the first data packet and regenerate the extracted payload as the second data packet. To this end, the communication device 100 may parse the payload of the first data packet and encode the parsed payload into the second data packet.

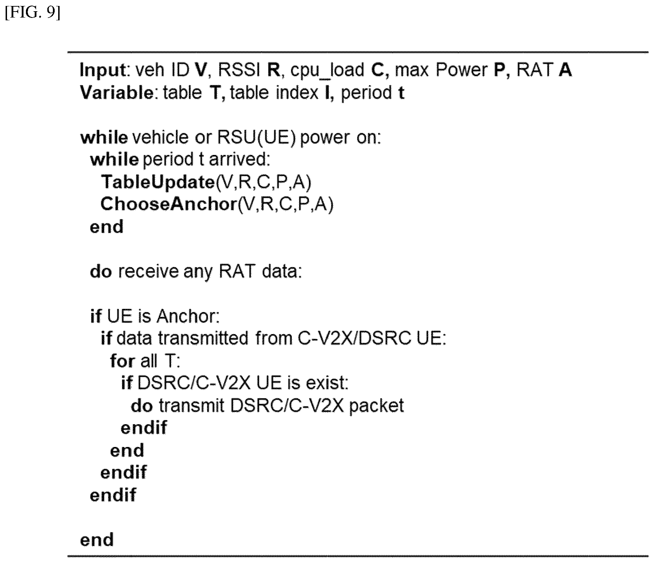

FIG. 9 shows an example of pseudocode for performing the communication method in the communication device 100 according to the embodiment of the present invention. Referring to FIG. 9, the communication device 100 periodically updates an ID V, RSSI information R, load information C, and power information P for each terminal within coverage and selects an anchor terminal. When the communication device 100 is an anchor terminal and receives a data packet supported by a C-V2X method, the communication device 100 looks up whether there is a terminal supporting only a DSRC method within the coverage, switches the data packet to be supported by the DSRC method, and transmits the switched data packet. When the communication device 100 is an anchor terminal and receives a data packet supported by the DSRC method, the communication device 100 looks up whether there is a terminal supporting only the C-V2X method within the coverage, switches the data packet to be supported by the C-V2X method, and transmits the switched data packet.

Meanwhile, according to periodic updates of the coverage information, when it is determined that a new anchor terminal other than the communication device 100 itself is present, the communication device 100 may stop switching from the first data packet to the second data packet, and may be switched to the reception mode. Here, the new anchor terminal may be a hybrid terminal mounted on an RSU or a vehicle.

Although not illustrated, when the communication device 100 that has served as the anchor terminal no longer serves as the anchor terminal due to the appearance of a new anchor terminal, the communication device 100 may broadcast a message indicating that the communication device 100 itself is no longer an anchor terminal.

According to embodiments of the present invention, a hybrid terminal supporting a first communication method and a second communication method relays communication between a terminal supporting only the first communication method and a terminal supporting only the second communication method, and thus road conditions can be shared in real time between vehicles on the road. Further, a hybrid terminal supporting both the first communication method and the second communication method can serve as an anchor even in an environment without an RSU due to a lack of infrastructure.

Terms described in the specification such as "unit" refer to software or a hardware component such as a field-programmable gate array (FPGA) or an Application-Specific Integrated Circuit (ASIC), and the unit performs certain functions. However, the "unit" is not limited to software or hardware. The "unit" may be configured in a storage medium that may be addressed or may be configured to be executed by at least one processor. Therefore, examples of the "unit" include components such as software components, object-oriented software components, class components and task components, and processes, functions, attributes, procedures, subroutines, segments of program codes, drivers, firmware, micro codes, circuits, data, databases, data structures, tables, arrays, and variables. Components and functions provided from "units" may be combined into a smaller number of components and "units" or may be further separated into additional components and "units." In addition, the components and the "units" may be implemented to play back one or more CPUs in a device or a secure multimedia card.

While exemplary embodiments of the present invention and their advantages have been described above in detail, it should be understood by those skilled in the art that various changes, substitutions and alterations may be made herein without departing from the scope of the invention as defined by the following claims.

## Claims

1. A communication device comprising:
a coverage management unit configured to periodically update coverage information including an in-coverage terminal list and information on communication methods supported by each terminal in the terminal list;
a reception unit configured to receive a first data packet supporting a first communication method;
a control unit configured to, when a terminal that is not allowed to support the first communication method and is allowed to support a second communication method that is different from the first communication method is present in the terminal list, switch the first data packet to a second data packet supporting the second communication method; and
a transmission unit configured to transmit the second data packet.

2. The communication device of claim 1, wherein the first communication method is one of a dedicated short range communication (DSRC) method and a cellular vehicle-to-everything (C-V2X) method, and
the second communication method is the other of the DSRC method and the C-V2X method.

3. The communication device of claim 2, wherein the control unit supports both the first communication method and the second communication method.

4. The communication device of claim 3, wherein, when a roadside unit is present in the terminal list, the control unit stops switching from the first data packet to the second data packet.

5. The communication device of claim 3, wherein the coverage information further includes at least one of received signal strength indicator information, load information, and power information for each terminal.

6. The communication device of claim 5, wherein the control unit selects an anchor terminal in the terminal list using at least one of the received signal strength indicator information, the load information, and the power information for each terminal.

7. The communication device of claim 6, wherein, when the anchor terminal is another communication device, the control unit stops switching from the first data packet to the second data packet.

8. A communication method comprising:
periodically updating coverage information including an in-coverage terminal list and information on communication methods supported by each terminal in the terminal list;
receiving a first data packet supporting a first communication method;
when a terminal that is not allowed to support the first communication method and is allowed to support a second communication method that is different from the first communication method is present in the terminal list, switching the first data packet to a second data packet supporting the second communication method; and
transmitting the second data packet.

9. The communication method of claim 8, further comprising selecting an anchor terminal in the terminal list using the coverage information,
wherein the coverage information further includes at least one of received signal strength indicator information, load information, and power information for each terminal.

10. The communication method of claim 9, wherein, when the anchor terminal is a roadside unit or another communication device, switching from the first data packet to the second data packet stops.
